# EUROPEAN PATENT SPECIFICATION

(11) **EP 2 538 172 B1**
(45) Date of publication and mention of the grant of the patent: **04.09.2019**
(21) Application number: 11828506.3
(22) Date of filing: 24.03.2011
(51) Int. Cl.: G01C 3/06, G01B 11/00, G01S 7/48, G01S 17/48, G01B 11/02, G01S 7/481, G01S 7/497

(54) **METHOD FOR ADJUSTING OPTICAL DISPLACEMENT SENSOR AND METHOD FOR MANUFACTURING OPTICAL DISPLACEMENT SENSOR**
VERFAHREN ZUR EINSTELLUNG EINES OPTISCHEN WEGGEBERS UND VERFAHREN ZUR HERSTELLUNG DES OPTISCHEN WEGGEBERS
PROCÉDÉ POUR RÉGLER UN CAPTEUR DE DÉPLACEMENT OPTIQUE ET PROCÉDÉ POUR FABRIQUER UN CAPTEUR DE DÉPLACEMENT OPTIQUE

(30) Priority: 30.09.2010 JP 2010222238
(43) Date of publication of application: 26.12.2012
(73) Proprietor: Omron Corporation, Kyoto-shi, Kyoto 600-8530 (JP)
(72) Inventor: YAMAKAWA, Kenta, Kyoto 600-8530 (JP); ICHIYANAGI, Hoshibumi, Kyoto 600-8530 (JP)
(74) Representative: Horn Kleimann Waitzhofer Patentanwälte PartG mbB
(86) International application number: PCT/JP2011/057137
(87) International publication number: WO 2012/042944

(56) References cited:
- JP-A- 6 213 657
- JP-A- 9 257 467
- JP-A- H06 213 657
- JP-A- 2001 280 911
- JP-A- 2003 004 416
- JP-A- 2004 508 560
- JP-A- 2008 145 160
- US-A- 5 032 023

## Description

### TECHNICAL FIELD

The present invention relates to a method for adjusting an optical displacement sensor and a method for manufacturing an optical displacement sensor, and particularly relates to a method for adjusting an optical displacement sensor for measuring the displacement of an object to be measured by using a triangulation principle, and a method for manufacturing an optical displacement sensor.

### BACKGROUND ART

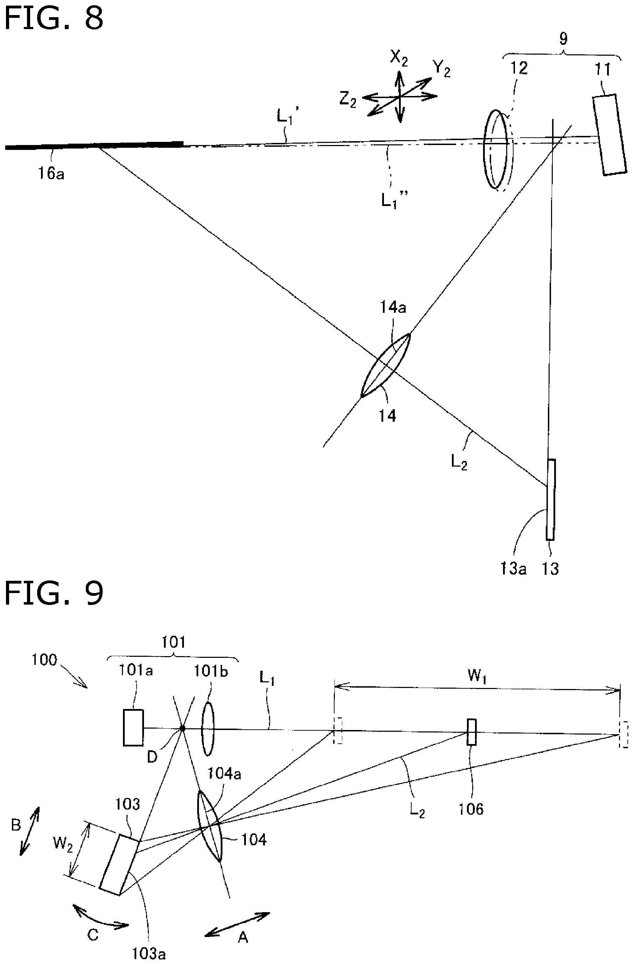

A conventional optical displacement sensor is disclosed in Japanese Laid-open Patent Publication No. 2008-145160 (Patent Citation 1), for example. FIG. 9 is a view showing the conventional optical displacement sensor 100 disclosed in Patent Citation 1. As shown in FIG. 9, the optical displacement sensor 100 is provided with a projection module 101 which includes a laser diode 101a for radiating light to an object to be measured 106, and a projection lens 101b for collecting light from the laser diode 101a; a CCD 103 for receiving the reflected light on a light-receiving face 103a when the light from the projection module 101 is reflected by the object to be measured 106; and a light-receiving lens 104 for imaging the reflected light on the light-receiving face 103a of the CCD 103.

When light is radiated toward the object to be measured 106 from the laser diode 101a, the radiated light is reflected by the object to be measured 106, and the reflected light is received by the light-receiving face 103a of the CCD 103 via the light-receiving lens 104, and the optical displacement sensor 100 thereby measures the displacement of the object to be measured 106 on the basis of the position of an image formed by the received light.

US 5 032 023 A describes an apparatus for a variable depth triangulation ranging system, wherein the ranging system includes means for emitting a light beam, means for focusing an emitted light beam on an object, and lens means for imaging reflected light onto an input end of said apparatus.

JP H06 213657 A describes a position adjusting mechanism which moves a light receiving lens in parallel with a light projecting axis on a beam of light. When the light receiving lens is moved in parallel with the light projecting axis, the light receiving range is changed without changing a setting of the correcting coefficient of the rectilinearity correcting circuit.

### CITATION LIST

### PATENT LITERATURE

(Patent Citation 1) Japanese Laid-open Patent Publication No.2008-145160

### SUMMARY OF INVENTION

### < Technical Problem >

The arrangement of the projection module 101, the CCD 103, and the light-receiving lens 104 is adjusted so that the Scheimpflug condition is met. Specifically, the light-receiving face 103a of the CCD 103 has a predetermined width W₂, and the reflection position of an object to be measured 106 in the range in which reflected light can be received by the light-receiving face 103a has a predetermined width W₁ on the optical axis of the projection module 101, i.e., the projection axis L₁. The arrangement of the abovementioned components is adjusted so that lines extending from the reflection position in the predetermined width W₁, the light-receiving face 103a, and a principal face 104a of the light-receiving lens 104 intersect at a single point D, i.e., so that the Scheimpflug condition is met. By this adjustment, focus is achieved on the light-receiving face 103a during imaging, irrespective of the position at which the light is reflected in the predetermined width W₁. The light-receiving lens 104 is considered to be a thin lens in this description.

In the adjustment according to Patent Citation 1, the light-receiving lens 104 is shifted along the optical axis of the light-receiving lens 104, i.e., in the direction of the light-receiving axis L₂, as indicated by the arrow A in FIG. 9, and the CCD 103 is slid and rotated as indicated by the arrows B and C in FIG. 9. Specifically, two members, the light-receiving lens 104 and the CCD 103, are adjusted.

However, with this adjustment method, for example, in the case that the CCD 103 is adjusted after the light-receiving lens 104 is adjusted, the light-receiving lens 104 must sometimes be readjusted when there is any error in the adjustment of the CCD 103, and adjustment is troublesome to perform. A larger amount of labor may then be required to perform the adjustment. Individual mechanisms must also be provided for adjustment, thus increasing the size of the optical displacement sensor 100 and possibly leading to increased size of the facility for manufacturing the optical displacement sensor 100.

A first object of the present invention is to provide a method for adjusting an optical displacement sensor whereby the optical system of an optical displacement sensor can be easily adjusted.

A second object of the present invention is to provide a method for manufacturing an optical displacement sensor in which the optical system of the optical displacement sensor can be easily adjusted.

### < Solution to Problem >

A method for adjusting an optical displacement sensor according to a first aspect of the present invention relates to a method for adjusting an optical displacement sensor having the features of claim 1.

The predetermined optical system can thereby be adjusted by moving only the light-receiving lens. Specifically, only a single member need be adjusted. The amount of labor required for adjustment can thereby be kept from increasing, the optical displacement sensor can be reduced in size, and the size of the facility for manufacturing the optical displacement sensor can also be reduced. As a result, adjustment can be easily performed.

In an embodiment, the adjustment method adjusts the predetermined optical system so that the Scheimpflug condition is met. The predetermined optical system can thereby be adjusted to meet the Scheimpflug condition by moving only the light-receiving lens.

Preferably, the projection module, the light-receiving element, and the light-receiving lens are arranged on a reference surface constituting a housing of the optical displacement sensor, and the adjustment method performs the adjustment by sliding the light-receiving lens over the reference surface. This obviates the need to provide another mechanism for adjustment, and enables adjustment by a simple method.

Preferably, the projection module has a light source configured to emit light, and a projection lens configured to adjust light from the light source to a predetermined shape, and the adjustment method performs the adjustment by moving the projection lens in a direction of an optical axis of the projection lens, in a direction perpendicular to the direction of the optical axis of the projection lens and parallel to the reference surface, and in a direction perpendicular to the direction of the optical axis of the projection lens and perpendicular to the reference surface. Through this configuration, the inclination of the optical axis of the projection module can be adjusted in a case in which the Scheimpflug condition is not met as components are arranged at an angle to the reference surface due to such factors as variation in the shape of the components constituting the projection module, for example.

A method for manufacturing an optical displacement sensor according to a second aspect of the present invention relates to a method for manufacturing an optical displacement sensor having the features of claim 5.

The predetermined optical system can thereby be adjusted by moving only the light-receiving lens during manufacturing of the optical displacement sensor. Specifically, only a single member need be adjusted. The amount of labor required for adjustment can thereby be kept from increasing, the optical displacement sensor can be reduced in size, and the size of the facility for manufacturing the optical displacement sensor can also be reduced. As a result, adjustment can be easily performed.

### <Advantageous Effects of Invention>

The method for adjusting an optical displacement sensor according to the present invention enables a predetermined optical system to be adjusted by moving only the light-receiving lens. Specifically, only a single member need be adjusted. The amount of labor required for adjustment can thereby be kept from increasing, the optical displacement sensor can be reduced in size, and the size of the facility for manufacturing the optical displacement sensor can also be reduced. As a result, adjustment can be easily performed.

The method for manufacturing an optical displacement sensor according to the present invention enables a predetermined optical system to be adjusted by moving only the light-receiving lens. Specifically, only a single member need be adjusted. The amount of labor required for adjustment can thereby be kept from increasing, the optical displacement sensor can be reduced in size, and the size of the facility for manufacturing the optical displacement sensor can also be reduced. As a result, adjustment can be easily performed.

### BRIEF DESCRIPTION OF THE DRAWINGS

FIG. 1 is a perspective view showing the outside of the optical displacement sensor.
FIG. 2 is a plan view from the direction of the arrow II in FIG. 1, showing a case in which the cover of the optical displacement sensor shown in FIG. 1 is removed.
FIG. 3 is a perspective view showing the projection lens.
FIG. 4 is a perspective view showing the light-receiving lens.
FIG. 5 is a schematic view showing the optical displacement sensor.
FIG. 6 is a view showing a case in which the Scheimpflug condition is not met in the schematic view of FIG. 5.
FIG. 7 is a view showing the procedure for adjusting the position of the light-receiving lens so that the Scheimpflug condition is met in the schematic view of FIG. 6.
FIG. 8 is a view showing the procedure for adjusting the position of the projection lens so that the Scheimpflug condition is met in the schematic view of FIG. 6.
FIG. 9 is a view showing the conventional optical displacement sensor disclosed in Patent Citation 1.

### DESCRIPTION OF EMBODIMENTS

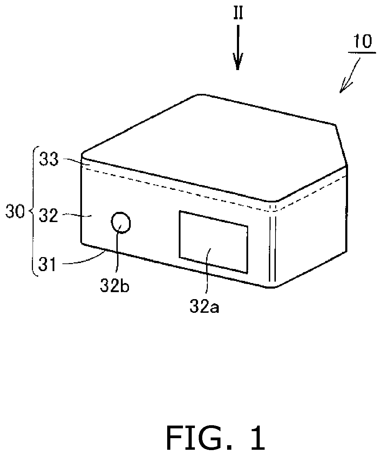

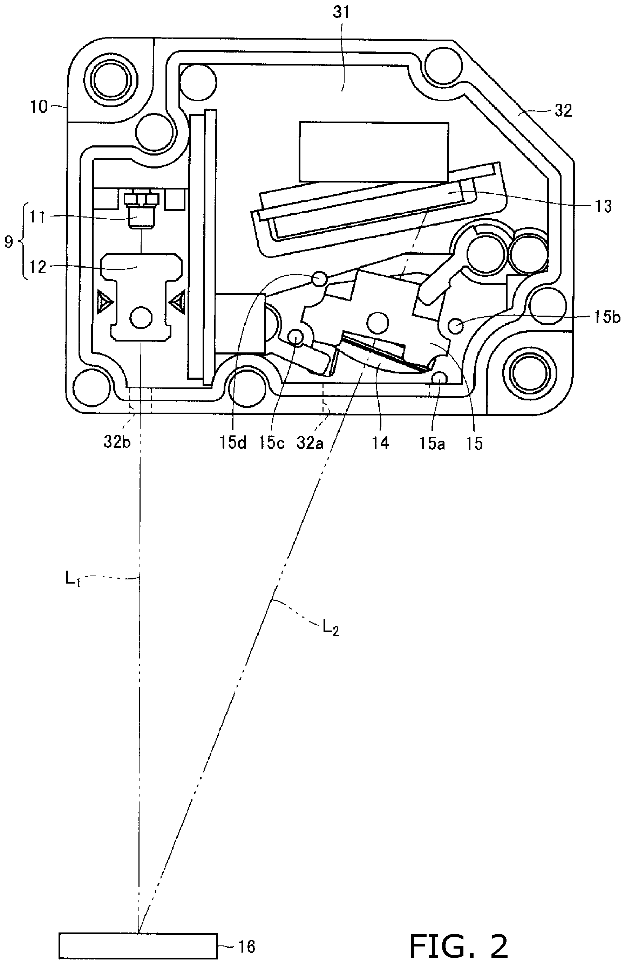

The method for adjusting an optical displacement sensor according to an embodiment of the present invention will be described with reference to the drawings. FIG. 1 is a perspective view showing the outside of the optical displacement sensor 10. FIG. 2 is a plan view from the direction of the arrow II in FIG. 1, showing a case in which a cover 33 of the optical displacement sensor 10 shown in FIG. 1 is removed. In addition to the plan view of the optical displacement sensor 10, FIG. 2 also shows an object to be measured 16. As shown in FIGS. 1 and 2, the optical displacement sensor 10 measures the displacement of the object to be measured 16. In the optical displacement sensor 10, a projection module 9 for emitting light in a desired beam shape to the object to be measured 16, a light-receiving element 13 for receiving reflected light from the object to be measured 16, the reflected light being formed by light from the projection module 9, and a light-receiving lens 14 positioned between the object to be measured 16 and the light-receiving element 13 are provided inside a substantially rectangular housing 30. The projection module 9 includes a light source 11 for emitting light, and a projection lens 12 positioned between the object to be measured 16 and the light source 11. The projection module 9, the light-receiving element 13, and the light-receiving lens 14 constitute a predetermined optical system. The three-dot chain lines in FIG. 2 indicate the optical axis of the projection module 9, i.e., the projection axis L₁, along which the light rays emitted by the projection module 9 travel, and the optical axis, i.e., the light-receiving axis L₂, of the light-receiving lens 14 for receiving the reflected light from the object to be measured 16

The housing 30 has a bottom surface 31 disposed at the bottom on which the members constituting the optical system of the optical displacement sensor 10 are fixed, and openings 32a, 32b, and includes a side wall 32 disposed so as to surround the peripheral edge of the bottom surface 31, and a cover 33 disposed opposite the bottom surface 31. The bottom surface 31 is flat, and the light source 11 and other components are fixed thereon. The side wall 32 is configured so as to have a connecting part (not shown) to which a cable or the like can be connected. The opening 32a is provided opposite the light-receiving lens 14, and the opening 32b is provided opposite the projection lens 12.

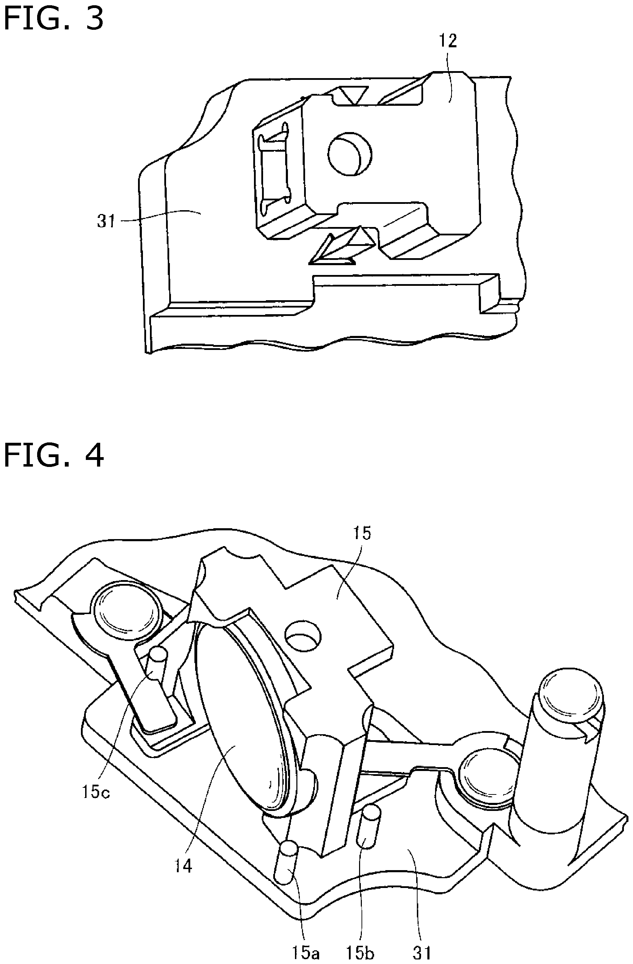

FIG. 3 is a perspective view showing the projection lens 12. FIG. 4 is a perspective view showing the light-receiving lens 14. As shown in FIGS. 1 through 4, the light source 11 is a laser diode which emits a laser beam to the object to be measured 16. The projection lens 12 includes a lens holder for accommodating a lens, and collects the light emitted from the light source 11 and adjusts the shape of the light from the light source 11 to form a predetermined shape. The light-receiving element 13 is a CMOS (Complementary Metal Oxide Semiconductor) sensor in which the reflected light from the object to be measured 16 is received on a light-receiving face. A plurality of light-receiving elements is arranged in a line on the light-receiving face. The light-receiving lens 14 is a single lens having an aspherical surface on which the reflected light is incident, for example, and is accommodated in a lens holder 15. The light-receiving lens 14 collects the reflected light from the object to be measured 16 and images the light on the light-receiving face. The light-receiving lens 14 is disposed so that the light-receiving axis L₂ passes through the center of the light-receiving lens 14, and the principal face of the light-receiving lens 14 is orthogonal to the light-receiving axis L₂.

The lens holder 15 accommodates the light-receiving lens 14 so that the peripheral edge of the light-receiving lens 14 is sealed in four places, for example, the surface of the lens holder 15 adjacent to the bottom surface 31 is flat, and the shape of the lens holder 15 as viewed from the direction of the arrow II is substantially rectangular. Pins 15a through 15d are fixed to the bottom surface 31 in four locations around the lens holder 15. The four pins 15a through 15d are disposed so as to correspond to the corners of the substantially rectangular shape of the lens holder 15, and are positioning members for when the lens holder 15 is moved.

In the optical displacement sensor 10, when a laser beam is emitted from the light source 11 of the projection module 9, the emitted light reaches the object to be measured 16 via the opening 32b of the side wall 32 and is reflected by the object to be measured 16. The reflected light from the object to be measured 16 is incident on the light-receiving lens 14 via the opening 32a of the side wall 32, and the light-receiving lens 14 images the reflected light on the light-receiving face. The position of the image received when the light is imaged is then detected. The optical displacement sensor 10 thereby measures the displacement of the object to be measured 16 in the direction of the projection axis L₁.

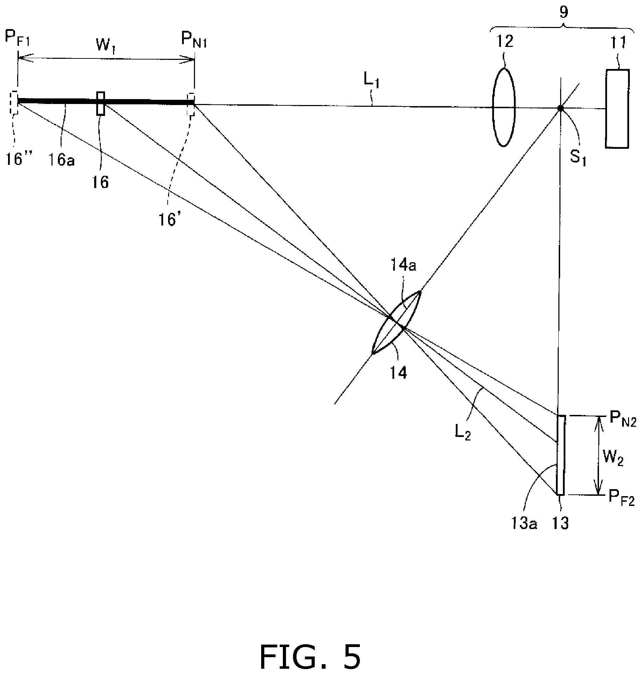

In this optical displacement sensor 10, the arrangement of the projection module 9, the light-receiving element 13, and the light-receiving lens 14 is adjusted so as to satisfy the Scheimpflug condition. FIG. 5 is a schematic view showing the optical displacement sensor 10. Specifically, the optical displacement sensor 10 has a predetermined measurement range W₁ in which the displacement of the object to be measured 16 can be measured, as shown in FIG. 5. This predetermined measurement range W₁ indicates the reflection position 16a of light reflected by the object to be measured 16, and is the range from a first position P_{N1} near the light source 11 on the projection axis L₁ to a second position P_{F1} distant from the light source 11. Specifically, the reflection position 16a of the light reflected by the object to be measured 16 has a width in the predetermined measurement range W₁ on the projection axis L₁. The object to be measured 16' at the first position P_{N1} and the object to be measured 16" at the second position P_{F1} are indicated by dotted lines in FIG. 5, and the reflection position 16a of light, which is the predetermined measurement range W₁, is indicated by a heavy line. The predetermined measurement range W₁ is 20 to 30 mm, for example. A light-receiving face 13a of the light-receiving element 13 has a predetermined width W₂, corresponding to the predetermined measurement range W₁, from a position P_{N2} near the light source 11 to a position P_{F2} distant from the light source 11.

The configuration of the optical displacement sensor 10 is adjusted so that a predetermined optical system satisfies the Scheimpflug condition, i.e., so that lines extending from the reflection position 16a (projection axis L₁) for the object to be measured 16, a principal face 14a of the light-receiving lens 14, and the light-receiving face 13a of the light-receiving element 13 intersect at a single point S₁. By this adjustment in the optical displacement sensor 10, focus is achieved on the light-receiving face 13a during imaging, irrespective of the position at which the light is reflected in the measurement range W₁. The optical displacement sensor 10 thus measures the displacement of the object to be measured 16 in the measurement range W₁.

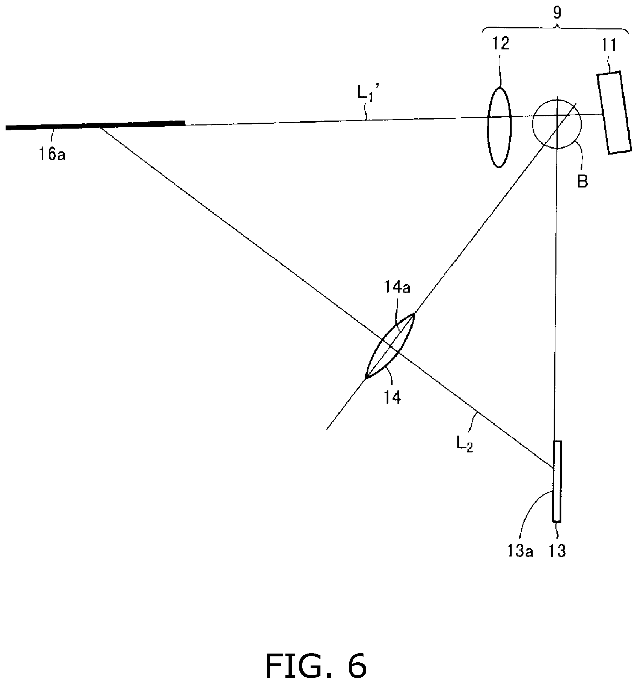

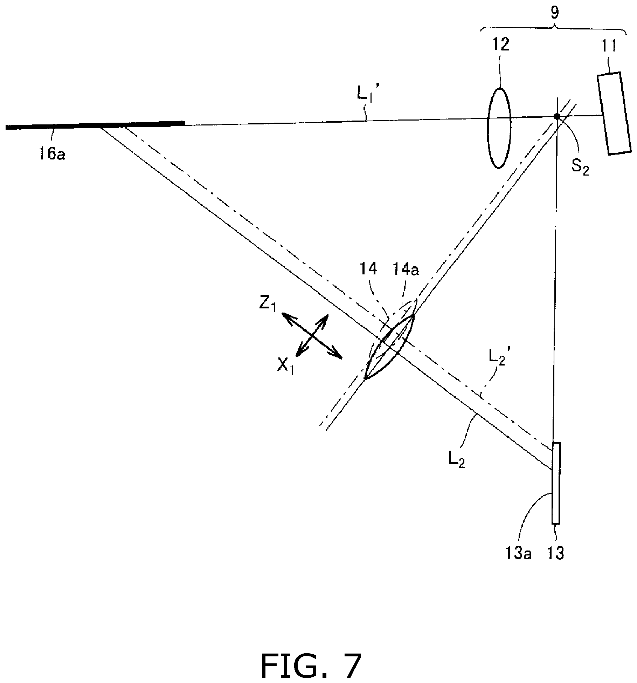

The specific method of adjustment to meet the Scheimpflug condition will next be described. FIG. 6 is a view showing a case in which the Scheimpflug condition is not met in the schematic view of FIG. 5. FIG. 7 is a view showing the procedure for adjusting the position of the light-receiving lens 14 so that the Scheimpflug condition is met in the schematic view of FIG. 6. The position-adjusted light-receiving lens 14, the principal face 14a of the light-receiving lens 14, and the light-receiving axis L₂' are indicated by dot-dash lines in FIG. 7.

As shown in FIG. 6, since the attachment position of the light source 11 is misaligned, the line extending from the reflection position 16a of the object to be measured 16 on the projection axis L₁' does not intersect at a single point with the lines extending from the principal face 14a of the light-receiving lens 14 and the light-receiving face 13a of the light-receiving portion 13. The method of adjustment for such a case will be described.

First, the light source 11, the projection lens 12, the light-receiving element 13, and the light-receiving lens 14 are arranged in advance as shown in FIG. 6. At this time, the light source 11, the projection lens 12, and the light-receiving element 13, for example, are mounted on the bottom surface 31 of the housing 30 in advance. This mounting step is the first attachment step.

The position of the light-receiving lens 14 is then moved. Specifically, with the light-receiving lens 14 accommodated in the lens holder 15, the lens holder 15 is pushed against the bottom surface 31 by an arm or the like. In this state, the light-receiving lens 14 is slid in the Z₁ direction (direction of the light-receiving axis L₂) and the X₁ direction (direction parallel to the bottom surface 31 and perpendicular to the direction of the light-receiving axis L₂) in FIG. 7. Sliding means slipping on the bottom surface 31. Specifically, the bottom surface 31 constitutes a reference surface as a reference for moving the light-receiving lens 14, and the light-receiving lens 14 is moved forward, backward, left, and right in two axes with the reference surface as a reference. The range of movement of the lens holder 15 at this time is restricted by the pins 15a through 15d.

Adjustment is thus performed by moving the light-receiving lens 14 so that the Scheimpflug condition is met. Specifically, the light-receiving axis L₂ is adjusted in the Z₁ direction (direction of the light-receiving axis L₂) and the X₁ direction (direction parallel to the bottom surface 31 and perpendicular to the direction of the light-receiving axis L₂). The step of moving the light-receiving lens 14 is the light-receiving lens movement step.

When the light-receiving lens 14 reaches the position at which the Scheimpflug condition is met, i.e., the position at which lines extending from the reflection position 16a of the object to be measured 16, the principal face 14a of the light-receiving lens 14, and the light-receiving face 13a of the light-receiving element 13 intersect at a single point, the lens holder 15 is fixed to the bottom surface 31 at the position. An ultraviolet-curing adhesive, a screw, or the like is used for this fixing. As shown in FIG. 7, the line extending from the reflection position 16a of the object to be measured 16 and the one-dot chain line extending from the principal face 14a of the position-adjusted light-receiving lens 14 and the line extending from the light-receiving face 13a of the light-receiving element 13 intersect at a single point S₂. The step of fixing the light-receiving lens 14 to the bottom surface 31 is the second attachment step.

By the method for adjusting the optical displacement sensor 10, the predetermined optical system can be adjusted to meet the Scheimpflug condition by moving only the light-receiving lens 14. Specifically, only a single member need be adjusted. The amount of labor required for adjustment can thereby be kept from increasing, the optical displacement sensor 10 can be reduced in size, and the size of the facility for manufacturing the optical displacement sensor 10 can also be reduced. As a result, adjustment can be easily performed.

Since the adjustment is accomplished merely by sliding the lens holder 15 on the bottom surface 31, the light-receiving lens 14 being accommodated in the lens holder, there is no need to provide another mechanism for adjustment, and the adjustment can be performed by a simple method.

By the method for manufacturing the optical displacement sensor 10, the predetermined optical system can be adjusted to meet the Scheimpflug condition by moving only the light-receiving lens 14. Specifically, only a single member need be adjusted. The amount of labor required for adjustment can thereby be kept from increasing, the optical displacement sensor 10 can be reduced in size, and the size of the facility for manufacturing the optical displacement sensor 10 can also be reduced. As a result, adjustment can be easily performed.

Another method for adjusting to meet the Scheimpflug will next be described. FIG. 8 is a view showing the procedure for adjusting the position of the projection lens 12 so that the Scheimpflug condition is met in the schematic view of FIG. 6. The position-adjusted projection lens 12 and the projection axis L₁" are indicated by two-dot chain lines in FIG. 8.

The adjustment method for the state shown in FIG. 6 will again be described.

First, the light source 11, the projection lens 12, the light-receiving element 13, and the light-receiving lens 14 are arranged in advance as shown in FIG. 6. At this time, the light source 11 and the light-receiving element 13, for example, are mounted on the bottom surface 31 of the housing 30 in advance.

Here, the position of the projection lens 12 is first moved. Specifically, by holding the lens holder, in which the projection lens 12 is accommodated, with an arm or the like at the top part of the cover 33 side of the bottom surface 31, the projection lens 12 is moved in the Z₂ direction (direction of the projection axis L₁), the X₂ direction (direction parallel to the bottom surface 31 and perpendicular to the projection axis L₁), and the Y₂ direction (direction perpendicular to the bottom surface 31 and perpendicular to the projection axis L₁) in FIG. 8. In other words, the projection lens 12 in a state of separation from the bottom surface 31 is moved along the triaxial directions including the forward-backward, left-right, and up-down axes.

By moving the projection lens 12 in this manner, the projection axis L₁ is adjusted in the Z₂ direction (direction of the projection axis L₁), the X₂ direction (direction parallel to the bottom surface 31 and perpendicular to the projection axis L₁), and the Y₂ direction (direction perpendicular to the bottom surface 31 and perpendicular to the projection axis L₁).

The projection lens 12 is then fixed in the position to which the projection lens is moved, and after the projection lens 12 is thus fixed, the light-receiving lens 14 is fixed to the bottom surface 31 in the same manner as in the light-receiving lens movement step and the second attachment step described above.

The attachment positions of the projection lens 12 and the light-receiving lens 14 are thus adjusted so that the Scheimpflug condition is met. Through this configuration, the inclination of the projection axis L₁' can be suppressed in a case in which the Scheimpflug condition is not met as components are arranged at an angle to the bottom surface 31 due to such factors as variation in the shape of the components constituting the projection module 9, for example. The position of the light-receiving lens 14 can also be adjusted with a suppressed movement.

The light-receiving element 13 is a CMOS sensor in the embodiment described above, but this configuration is not limiting, and the light-receiving element 13 may also be a CCD (Charge Coupled Device) sensor.

An example is described in the above embodiment in which the light-receiving lens 14 is moved by sliding on the bottom surface 31 in S12, but this configuration is not limiting, and grooves or the like extending in the Z₁ direction and X₁ direction may be provided in the bottom surface 31, and the light-receiving lens 14 may be moved along the grooves, for example.

An example is described in the above embodiment in which pins 15a through 15d are provided around the lens holder 15 and the movement range of the lens holder 15 is restricted by the pins 15a through 15d, but this configuration is not limiting, and a configuration may be adopted in which pins 15a through 15d in particular are not provided, and the movement range of the lens holder 15 is not restricted.

An example is described in the above embodiment in which the movement of the light-receiving lens 14 is restricted by the pins 15a through 15d, but movement of the projection lens 12 as well may be restricted by attaching a pin or the like to the bottom surface 31 in advance in the same manner.

The above embodiment describes an optical displacement sensor 10 being adjusted so that the Scheimpflug condition is met, but this configuration is not limiting, and the present invention can also be applied to adjusting an optical system. Specifically, only the light-receiving lens 14 need be adjusted to adjust the optical system.

An example is described in the above embodiment in which the light-receiving lens 14 is moved with the bottom surface 31 as a reference surface, but this configuration is not limiting, and the side wall 32, for example, or another surface may be used as a reference surface for movement.

An embodiment of the invention was described above with reference to the drawings, but the present invention is not limited to the embodiment shown in the drawings. Various revisions and/or modifications within the scope of the claims may be made to the embodiment shown in the drawings.

### INDUSTRIAL APPLICABILITY

The present invention is effective for use in manufacturing an optical displacement sensor.

### REFERENCE SIGNS LIST

- 9: projection module
- 10: optical displacement sensor
- 11: light source
- 12: projection lens
- 13: light-receiving element
- 13a: light-receiving face
- 14: light-receiving lens
- 14a: principal face
- 15: lens holder
- 15a-15d: pins
- 16: measured object
- 16a: reflection position
- 30: housing
- 31: bottom surface
- 32: side wall
- 32a, 32b: openings
- 33: cover

## Claims

1. A method for adjusting an optical displacement sensor (10) including a predetermined optical system, the predetermined optical system having a projection module (9) configured to project light onto an object to be measured (16), a light-receiving element (13) configured to receive reflected light reflected by the object (16) to be measured of light projected from the projection module (9), and a light-receiving lens (14) configured to image the reflected light onto the light-receiving element (13), the light-receiving lens (14) being positioned between the object to be measured (16) and the light-receiving element (13),
**characterized in that** the method comprises
adjusting by moving only a single member in a direction of an optical axis (Z₁) of the light-receiving lens (14) and in a direction perpendicular to the direction of the optical axis of the light-receiving lens (X₁) so that the Scheimpflug condition is met, wherein the single member is a lens holder (15) accommodating the light-receiving lens (14), and the movement of the lens holder (15) is restricted by four pins (15a-15d), located around the lens holder (15) and attached to a surface of a housing (30) of the optical displacement sensor (10), when the lens holder (15) is moved to contact one of the pins; and
the four pins are disposed so as to correspond to corners of the lens holder (15).

2. The method for adjusting the optical displacement sensor (10) according to claim 1, wherein
the projection module (9), the light-receiving element (13), and the light-receiving lens (14) are arranged on a reference surface of the housing (30), and
adjusting is performed by sliding the light-receiving lens (14) over the reference surface.

3. The method for adjusting the optical displacement sensor (10) according to claim 2, wherein
the projection module (9) has a light source (11) configured to emit light, and a projection lens (12) configured to adjust light from the light source (11) to a predetermined shape; and
the method further comprising
adjusting by moving the projection lens (12) in a direction of an optical axis of the projection lens (Z₁), in a direction perpendicular to the direction of the optical axis of the projection lens (X₁) and parallel to the reference surface, and in a direction perpendicular to the direction of the optical axis of the projection lens (X₁) and perpendicular to the reference surface (31).

4. The method for adjusting the optical displacement sensor (10) according to claim 2, wherein the reference surface is provided with grooves extending in the direction of the optical axis (Z1) of the light-receiving lens (14) and in the direction perpendicular to the direction of the optical axis of the light-receiving lens (X1), and the light-receiving lens (14) are moved along the grooves.

5. A method for manufacturing an optical displacement sensor (10) having a projection module (9) configured to project light onto an object to be measured (16), a light-receiving element (13) configured to receive reflected light reflected by the object to be measured (16) of light projected from the projection module (9), and a light-receiving lens (14) configured to image the reflected light onto the light-receiving element (13), the light-receiving lens (14) being positioned between the object to be measured (16) and the light-receiving element (13), the method comprising:
a first attachment step of mounting the projection module (9) and the light-receiving element (13) to a reference surface of a housing (30) of the optical displacement sensor (10);
a light-receiving lens movement step of moving a single member accommodating the light-receiving lens (14) in a direction of an optical axis of the light-receiving lens (Z₁) and in a direction perpendicular to the direction of the optical axis of the light-receiving lens (X₁) so that the Scheimpflug condition is met, the reference surface used as a reference, wherein the single member is a lens holder (15), and the movement of the lens holder (15) is restricted by four pins (15a-15d), located around the lens holder (15) and attached to a surface of a housing (30) of the optical displacement sensor (10), when the lens holder is moved to contact one of the pins; and
a second attachment step of mounting the light-receiving lens (14) to the reference surface at a position to which the light-receiving lens (14) is moved in the light-receiving lens movement step; and
the four pins are disposed so as to correspond to corners of the lens holder (15).

## Patentansprüche

1. Verfahren zum Einstellen eines optischen Verschiebungssensors (10), der ein vorgegebenes optisches System umfasst, wobei das vorgegebene optische System ein Projektionsmodul (9), das eingerichtet ist, Licht auf ein zu messendes Objekt (16) zu projizieren, ein Licht-Empfangselement (13), das eingerichtet ist, von dem aus dem Projektionsmodul (9) projizierten Licht, das reflektierte Licht zu empfangen, das von dem zu messenden Objekt (16) reflektiert wird, und eine Lichtempfangslinse (14) aufweist, die eingerichtet ist, das reflektierte Licht auf dem Licht-Empfangselement (13) abzubilden, wobei die Lichtempfangslinse (14) zwischen dem zu messenden Objekt (16) und dem Licht-Empfangselement (13) positioniert ist,
**dadurch gekennzeichnet, dass** das Verfahren aufweist
Einstellen durch Bewegen ausschließlich eines einzelnen Elements in einer Richtung einer optischen Achse (Z₁) der Lichtempfangslinse (14) und in einer Richtung senkrecht zu der Richtung der optischen Achse der Lichtempfangslinse (X₁), so dass die Scheimpflug-Bedingung erfüllt ist, wobei das einzelne Element ein Linsenhalter (15) ist, der die Lichtempfangslinse (14) aufnimmt, und die Bewegung des Linsenhalters (15) durch vier Stifte (15a - 15d) beschränkt wird, die sich um den Linsenhalter (15) herum befinden und die auf einer Oberfläche eines Gehäuses (30) des optischen Verschiebungssensors (10) befestigt sind, wenn der Linsenhalter (15) bewegt wird, um einen der Stifte zu kontaktieren, und
wobei die vier Stifte derart angeordnet sind, das sie den Ecken des Linsenhalters (15) entsprechen.

2. Verfahren zum Einstellen des optischen Verschiebungssensors (10) gemäß Anspruch 1, wobei
das Projektionsmodul (9), das Licht-Empfangselement (13) und die Lichtempfangslinse (14) auf einer Referenzfläche des Gehäuses (30) angeordnet sind, und
das Einstellen durch Gleiten der Lichtempfangslinse (14) über die Referenzfläche durchgeführt wird.

3. Verfahren zum Einstellen des optischen Verschiebungssensors (10) gemäß Anspruch 2, wobei
das Projektionsmodul (9) eine Lichtquelle (11), die eingerichtet ist, Licht zu emittieren, und eine Projektionslinse (12) aufweist, die eingerichtet ist, Licht aus der Lichtquelle (11) an eine vorgegebene Form anzupassen, und
wobei das Verfahren ferner aufweist
Einstellen durch Bewegen der Projektionslinse (12) in einer Richtung einer optischen Achse der Projektionslinse (Z₁), in einer Richtung senkrecht zu der Richtung der optischen Achse der Projektionslinse (X₁) und parallel zu der Referenzfläche, und in einer Richtung senkrecht zu der Richtung der optischen Achse der Projektionslinse (X₁) und senkrecht zu der Referenzfläche (31).

4. Verfahren zum Einstellen des optischen Verschiebungssensors gemäß Anspruch 2, wobei die Referenzfläche mit Nuten versehen ist, die sich in der Richtung der optischen Achse (Z1) der Lichtempfangslinse (14) und in der Richtung senkrecht zu der Richtung der optischen Achse der Lichtempfangslinse (X1) erstrecken, und die Lichtempfangslinse (14) entlang der Nuten bewegt wird.

5. Verfahren zum Herstellen eines optischen Verschiebungssensors (10), der ein Projektionsmodul (9), das eingerichtet ist, Licht auf ein zu messendes Objekt (16) zu projizieren, ein Licht-Empfangselement (13), das eingerichtet ist, von dem aus dem Projektionsmodul (9) projizierten Licht, das reflektierte Licht zu empfangen, das von dem zu messenden Objekt (16) reflektiert wird, und eine Lichtempfangslinse (14) aufweist, die eingerichtet ist, das reflektierte Licht auf dem Licht-Empfangselement (13) abzubilden, wobei die Lichtempfangslinse (14) zwischen dem zu messenden Objekt (16) und dem Licht-Empfangselement (13) positioniert ist, wobei das Verfahren aufweist:
einen ersten Befestigungsschritt eines Montierens des Projektionsmoduls (9) und des Licht-Empfangselements (13) auf einer Referenzfläche eines Gehäuses (30) des optischen Verschiebungssensors (10);
einen Lichtempfangslinsen-Bewegungsschritt eines Bewegens eines einzelnen Elements, das die Lichtempfangslinse (14) aufnimmt, in einer Richtung einer optischen Achse der Lichtempfangslinse (Z₁) und in einer Richtung senkrecht zu der Richtung der optischen Achse der Lichtempfangslinse (X₁), so dass die Scheimpflug-Bedingung erfüllt ist, wobei die Referenzfläche als eine Referenz verwendet wird, wobei das einzelne Element ein Linsenhalter (15) ist, und die Bewegung des Linsenhalters (15) durch vier Stifte (15a - 15d) beschränkt wird, die sich um den Linsenhalter (15) herum befinden, und auf einer Fläche eines Gehäuses (30) des optischen Verschiebungssensors (10) befestigt sind, wenn der Linsenhalter bewegt wird, um einen der Stifte zu kontaktieren, und
einen zweiten Befestigungsschritt eines Montierens der Lichtempfangslinse (14) auf der Referenzfläche an einer Position, an welche die Lichtempfangslinse (14) in dem Lichtempfangslinsen-Bewegungsschritt bewegt wird; und
wobei die vier Stifte so angeordnet sind, dass sie den Ecken des Linsenhalters (15) entsprechen.

## Revendications

1. Procédé de réglage d'un capteur de déplacement optique (10) incluant un système optique prédéterminé, le système optique prédéterminé ayant un module de projection (9) configuré pour projeter de la lumière sur un objet à mesurer (16), un élément de réception de lumière (13) configuré pour recevoir la lumière réfléchie, réfléchie par l'objet (16) à mesurer, de la lumière projetée à partir du module de projection (9), et une lentille de réception de lumière (14) configurée pour former une image de la lumière réfléchie sur l'élément de réception de lumière (13), la lentille de réception de lumière (14) étant positionnée entre l'objet à mesurer (16) et l'élément de réception de lumière (13),
**caractérisé en ce que** le procédé comprend
le réglage en déplaçant uniquement un seul élément dans une direction d'un axe optique (Z₁) de la lentille de réception de lumière (14) et dans une direction perpendiculaire à la direction de l'axe optique de la lentille de réception de lumière (X₁) de sorte que la condition de Scheimpflug est satisfaite, le seul élément étant un support de lentille (15) accueillant la lentille de réception de lumière (14), et le mouvement du support de lentille (15) étant restreint par quatre broches (15a-15d), situées autour du support de lentille (15) et fixées sur une surface d'un boîtier (30) du capteur de déplacement optique (10), lorsque l'on déplace le support de lentille (15) pour entrer en contact avec l'une des broches ;
et
les quatre broches sont disposées de manière à correspondre aux coins du support de lentille (15).

2. Procédé de réglage du capteur de déplacement optique (10) selon la revendication 1, dans lequel
le module de projection (9), l'élément de réception de lumière (13), et la lentille de réception de lumière (14) sont agencés sur une surface de référence du boîtier (30), et
le réglage est effectué en faisant glisser la lentille de réception de lumière (14) sur la surface de référence.

3. Procédé de réglage du capteur de déplacement optique (10) selon la revendication 2, dans lequel
le module de projection (9) a une source de lumière (11) configurée pour émettre de la lumière, et une lentille de projection (12) configurée pour régler la lumière provenant de la source de lumière (11) selon une forme prédéterminée ; et
le procédé comprenant en outre
le réglage en déplaçant la lentille de projection (12) dans une direction d'un axe optique de la lentille de projection (Z₁), dans une direction perpendiculaire à la direction de l'axe optique de la lentille de projection (X₁) et parallèle à la surface de référence, et dans une direction perpendiculaire à la direction de l'axe optique de la lentille de projection (X₁) et perpendiculaire à la surface de référence (31).

4. Procédé de réglage du capteur de déplacement optique (10) selon la revendication 2, dans lequel la surface de référence est dotée de rainures qui s'étendent dans la direction de l'axe optique (Z₁) de la lentille de réception de lumière (14) et dans la direction perpendiculaire à la direction de l'axe optique de la lentille de réception de lumière (X₁), et la lentille de réception de lumière (14) est déplacée le long des rainures.

5. Procédé de fabrication d'un capteur de déplacement optique (10) ayant un module de projection (9) configuré pour projeter de la lumière sur un objet à mesurer (16), un élément de réception de lumière (13) configuré pour recevoir la lumière réfléchie, réfléchie par l'objet à mesurer (16), de la lumière projetée à partir du module de projection (9), et une lentille de réception de lumière (14) configurée pour former une image de la lumière réfléchie sur l'élément de réception de lumière (13), la lentille de réception de lumière (14) étant positionnée entre l'objet à mesurer (16) et l'élément de réception de lumière (13), le procédé comprenant :
une première étape de fixation consistant à monter le module de projection (9) et l'élément de réception de lumière (13) sur une surface de référence d'un boîtier (30) du capteur de déplacement optique (10) ;
une étape de déplacement de la lentille de réception de lumière consistant à déplacer un seul élément accueillant la lentille de réception de lumière (14) dans une direction d'un axe optique de la lentille de réception de lumière (Z₁) et dans une direction perpendiculaire à la direction de l'axe optique de la lentille de réception de lumière (X₁) de sorte que la condition de Scheimpflug est satisfaite, la surface de référence étant utilisée comme référence,
dans lequel le seul élément est un support de lentille (15), et le mouvement du support de lentille (15) est restreint par quatre broches (15a-15d), situées autour de support de lentille (15) et fixées sur une surface d'un boîtier (30) du capteur de déplacement optique (10), lorsque l'on déplace le support de lentille pour entrer en contacter avec l'une des broches ; et
une deuxième étape de fixation consistant à monter la lentille de réception de lumière (14) sur la surface de référence au niveau d'une position vers laquelle on déplace la lentille de réception de lumière (14) dans l'étape de déplacement de la lentille de réception de lumière ;
et
les quatre broches sont disposées de manière à correspondre aux coins du support de lentille (15).
